(19) **Europäisches Patentamt / European Patent Office / Office européen des brevets**

(11) **EP 2 320 435 A1**

(12) **EUROPEAN PATENT APPLICATION**
published in accordance with Art. 153(4) EPC

(43) Date of publication:
**11.05.2011 Bulletin 2011/19**

(51) Int Cl.:
*H01F 1/06* (2006.01)     *G11B 5/706* (2006.01)

(21) Application number: **08792373.6**

(22) Date of filing: **05.08.2008**

(86) International application number:
**PCT/JP2008/064390**

(87) International publication number:
**WO 2010/016154 (11.02.2010 Gazette 2010/06)**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(71) Applicants:
• **DOWA Electronics Materials Co., Ltd.**
**Chiyoda-ku**
**Tokyo 101-0021 (JP)**
• **Tohoku University**
**Aoba-ku**
**Sendai-shi**
**Miyagi 980-0812 (JP)**

(72) Inventors:
• **TOHJI, Kazuyuki**
**Sendai-shi**
**Miyagi 980-8579 (JP)**
• **YOSHIDA, Takayuki**
**Tokyo 101-0021 (JP)**
• **GOTOH, Takashi**
**Tokyo 101-0021 (JP)**
• **NAKAYAMA, Masatoshi**
**Tokyo 101-0021 (JP)**

(74) Representative: **Wimmer, Hubert**
**WAGNER & GEYER**
**Gewürzmühlstrasse 5**
**80538 München (DE)**

(54) **METALLIC MAGNETIC POWDER FOR MAGNETIC RECORDING AND PROCESS FOR PRODUCING THE METALLIC MAGNETIC POWDER**

(57)    According to a method for producing a metallic magnetic powder for magnetic recording, which comprises treatment including, in sequence, a step of allowing a reducing agent to act on a metallic magnetic powder comprising particles having a metallic magnetic phase composed mainly of Fe or Fe and Co and containing one or more of rare earth elements (including Y), Al and Si (these are hereinafter referred to as "nonmagnetic ingredient"), in a liquid containing a complexing agent capable of forming a complex with at least one or more of the nonmagnetic ingredients, to thereby make the nonmagnetic ingredient in the powder particles dissolve out into the liquid (dissolution treatment step), a step of heat treatment in a reducing gas atmosphere (re-reduction treatment step), and a step of heat treatment in an oxidizing gas atmosphere (stabilization treatment step), a metallic magnetic powder for magnetic recording, which comprises particles having a particle length of from 10 nm to 45 nm and an axial ratio of 2 or more and in which the tip part of the particles is rounded, is obtained.

Fig. 1

Example          Comparative Example

**Description**

TECHNICAL FIELD

The present invention relates to a metallic magnetic powder suitable for high-density magnetic recording, and to its production method.

BACKGROUND ART

With the recent tendency toward increased information capacity, the medium for record information has become desired to be a high-capacity one. In an attempt to construct such a high-capacity, high-density magnetic recording medium, development of magnetic particles that are as fine as possible and have high magnetic characteristics (especially coercive force) has heretofore been made aggressively. The present applicant also has clarified that even ultrafine particles having a mean particle size of 20 nm or so could exhibit magnetism, and has continued further development of fine magnetic particles having a high coercive force. However, when processed for heat application thereto (concretely, sintering, reduction), fine particles often undergo particle-to-particle fusion, and even when a precursor to be fine particles could be prepared, it is said that the particles may form clusters and therefore could hardly receive the benefit of the particle-finer progression.

Accordingly, for securing the independence of individual particles, for example, Patent Reference 1 teaches a technique of defining the amount of the sintering inhibitor per unit surface area and incorporating the sintering inhibitor in an amount more than the defined level for the purpose of preventing fusion of particles and enhancing the dispersibility thereof and for the purpose of bettering the magnetic characteristics and the surface performance of the magnetic recording medium.

Non-Patent Reference 1 discloses particles having a relatively small particle volume and a relatively low magnetic viscosity. However, in so far as magnetic particles not larger than 50 nm are referred to by themselves, any such magnetic powder has not been disclosed as yet, having a low magnetic viscosity and having a high coercive force.

Specifically noting the weather resistance (storage stability) of magnetic powder, the present applicant has made various investigations relating to the formation of oxide films that have heretofore been unknown. For example, the applicant has disclosed a technique relating to the abundance amount of Co in a surface oxide film (Patent Reference 2), and a technique of changing the valence change in a surface oxide film (Patent Reference 3), and has confirmed that powders having more excellent weather resistance (storage stability) than that of hitherto known powders can be provided. Further, from the result of local EDS of oxide films, the applicant has found that the composition in oxide films may have great influences on the oxidation resistance of the films and that, depending on the production condition, the composition in oxide films could be varied.

This is disclosed in Patent Reference 2.

Patent Reference 1: JP-A 2003-296915
Patent Reference 2: JP-A 2006-128535
Patent Reference 3: JP-A 2005-276361
Non-Patent Reference 1: S. J. F. Chadwick et al., Journal of Magnetism and Magnetic Materials, 134-137 (2005)

PROBLEMS THAT THE INVENTION IS TO SOLVE

In particle- finer progression of magnetic powder, the amount of the sintering inhibitor to be added increases relatively and the amount of the oxide film necessary for securing the weather resistance increases relatively, which, however, will be often problematic as having some negative influence on the magnetic characteristics of the powder. It is extremely difficult to solve the problem by any direct method of reducing the amount of the sintering inhibitor to be added or thinning the oxide film.

However, the sintering inhibitor is added to the starting material before firing (in other word, "baking"), for the purpose of preventing the sintering in firing or in thermal reduction, and therefore, it is any more useless in the metallic magnetic powder that has been produced through firing or thermal reduction. Accordingly, in case where the "nonmagnetic ingredient" to be contained in the metallic magnetic powder as derived from the sintering inhibitor could be removed, not reducing the amount of the sintering inhibitor to be added, then the relative amount ratio of the metallic part that contributes toward the magnetism could be increased while attaining the sintering prevention, and therefore the reduction in the saturation magnetization to be accompanied by the particle-finer progression could be retarded. One reason of head staining by coated magnetic recording media would be because of the influence of the sintering inhibitor-derived ingredient existing in the surface of particles; and from this viewpoint, it is effective to remove the nonmagnetic ingredient.

Further, the sintering inhibitor segregates around the surface of magnetic powder. By the heat in firing or reduction, the sintering inhibitor melts, and the sintering inhibitor ingredient would fuse (for necking) on the surface of individual particles and the magnetic particles therefore form clusters. Accordingly, when the sintering inhibitor around the surface could be removed, then the necking could be thawed and the intergranular clustering could be thereby solved, whereby the dispersibility of the magnetic powder in binder could be enhanced. However, it is not always easy to effectively remove only the sintering inhibitor-derived nonmagnetic ingredient from the particles of metallic magnetic powder, and the method is not as yet established.

The particle-finer progression has brought about the necessity of investigating the factors that have not heretofore been taken into consideration in the art. Concretely, it relates to the magnetic viscosity, of which, however, the influence has heretofore been ignored on large magnetic particles. Regarding extremely fine magnetic particles, it is said that, when the magnetic viscosity of such extremely fine magnetic particles is too high, it may have some influence on magnetic recording; and for securing stable magnetic recording, it may be said that magnetic particles having a low magnetic viscosity must be provided.

Accordingly, the present invention is to provide a metallic magnetic powder of fine particles having a high level of orientation but having a low magnetic viscosity.

MEANS FOR SOLVING THE PROBLEMS

The above-mentioned object is attained by a metallic magnetic powder for magnetic recording, which comprises particles having a particle length of from 10 to 45 nm and an axial ratio of 2 or more and in which the tip part of the particles is rounded. "The tip part is rounded" means that in the particles, for example, the radius of the curvature at the tip part in the long axis direction is larger than 1/6 of the length of the short axis. Specifically, in the invention, there is provided a metallic magnetic powder for magnetic recording, which comprises particles having a metallic magnetic phase composed mainly of Fe or Fe and Co, and having an oxide film, and wherein the mean long axis length of the powder particles is from 10 to 45 nm, the axial ratio of the particles (that is, the ratio of the long axis length to the short axis length) is 2 or more, the atomic ratio of (R + A1 + Si)/(Fe + Co), in which R represents a rare earth element (including Y) and which is computed from the data of the content (atomic %) of each element contained in the metallic magnetic powder particles, is 20% or less, and particles of which the radius of curvature at the tip part in the long axis direction in the TEM (transmission electronic microscope) image of the particles is larger than 1/6 of the length of the short axis thereof at both tips thereof account for 90% or more of all the particles therein. In particular, particles containing an oxide film and having a mean particle volume $V_{TEM}$ of 5000 nm$^3$ or less are preferred in the invention.

Now that the direction perpendicular to the long axis in the TEM image of the particles is called the short axis direction, the diameter of the longest part in the short axis direction of the particle is called the short axis length. In determining the abundance ratio of the particles having a large radius of curvature as above, 300 or more particles of which the entire profile can be confirmed on TEM are selected at random and analyzed, and the abundance ratio is computed as a percentage based on the number of the analyzed particles to be the denominator.

There is also provided a metallic magnetic powder for magnetic recording, wherein, in place of the definition of the radius of curvature at the tip part in the long axis direction of the particles in the above, the particles are so defined that those of which the profile around both tip parts in the long axis direction in the TEM image thereof satisfies the following formula (1) are contained in an abundance ratio of 50% or more:

$$D_l/D_w \geq 0.7 \ldots (1)$$

wherein $D_w$ means the above-mentioned short axis length, and $D_l$ means the diameter in the short axis direction at the position where the long axis direction distance from the tip part in the long axis direction of the particle is $D_w/2$. In determining the abundance ratio of the particles satisfying the formula (1), 300 or more particles of which the entire profile can be confirmed on TEM are selected at random and analyzed, and the abundance ratio is computed as a percentage based on the number of the analyzed particles to be the denominator.

In the invention, in addition, there is provided a metallic magnetic powder for magnetic recording, wherein the particles of such that, when, using the energy dispersive X-ray fluorescence spectrometer attached to TEM, the electron beam is aimed at the position of 5 nm to be the distance in the long axis direction from the tip part in the log axis direction of the particle, the element detection intensity satisfies the following formula (2) are contained in an abundance ratio of 70% or more:

$$I_{Al} + I_R < I_{Fe} + I_{Co} \ldots (2)$$

wherein $I_{Al}$, $I_R$, $I_{Fe}$ and $I_{Co}$ each are the detection intensity (maximum counts) of Al, rare earth element (including Y), Fe and Co, respectively; and $I_R$ of two or more rare earth elements, if any, is the total of the detection intensity of the individual rare earth elements. The maximum counts of each element are maximum value of the data found in the range of $\pm$ 1 keV around the center of the position at which the $K\alpha$ characteristic X-ray of the individual elements is said to exist. Regarding the matter as to whether or not a particle could satisfy the formula (2), in case where at least one end part of the (two) end parts in the long axis direction of the particle satisfies the formula (2), then it is concluded that the particle satisfies the formula (2). In determining the abundance ratio of the particles satisfying the formula (2), 20 or more particles of which the entire profile can be confirmed on TEM are selected at random and analyzed, and the abundance ratio is computed as a percentage based on the number of the analyzed particles to be the denominator.

In the invention, in particular, there is provided a metallic magnetic powder for magnetic recording, containing the particles that satisfy the above formula (1) in an abundance ratio of 50% or more, and containing the particles that satisfy formula (2) in an abundance ratio of 70% or more.

Further, of the magnetic powder of the type, in particular, there are provided those which, when observed on the transmission electronic microscope picture thereof, and when the coating thickness of the oxide film in the tip part in the long axis direction of the particle is represented by x nm and the coating thickness of the oxide film at the tip part in the short axis direction is by y nm, satisfies $x/y \leq 5$; those having a magnetic viscosity coefficient (-S) in an applied magnetic field of -1 kOe of from $1 \times 10^{-3}$ to $10 \times 10^{-3}$; those having a particle volume $V_{TEM}$ of 5000 nm$^3$ ($5 \times 10^{-18}$ cm$^3$) or less including the oxide film and approximated to a column; and those having an activation volume $V_{act}$, as measured for the powder, of from $1 \times 10^{-18}$ to $2 \times 10^{-18}$ cm$^3$, preferably those satisfying the following formula (3) in point of $V_{TEM}$ and $V_{act}$ thereof:

$$V_{TEM}/V_{act} \leq 1.2 \ ... \ (3).$$

As a method for producing the metallic magnetic powder as above, the invention provides a method for producing a metallic magnetic powder for magnetic recording which comprises treatment including, in sequence, a step of allowing a reducing agent to act on a metallic magnetic powder comprising particles having a metallic magnetic phase composed mainly of Fe or Fe and Co and containing one or more of rare earth elements (including Y), Al and Si (these are hereinafter referred to as "nonmagnetic ingredient"), in a liquid containing a complexing agent capable of forming a complex with at least one or more of the nonmagnetic ingredients, to thereby make the nonmagnetic ingredient in the powder particles dissolve out into the liquid (dissolution treatment step), a step of heat treatment in a reducing gas atmosphere (re-reduction treatment step), and a step of heat treatment in an oxidizing gas atmosphere (stabilization treatment step). Preferably, a step of forming an oxide film on the surface of the powder particles (oxidation treatment step) is provided between the dissolution treatment step and the re-reduction step. As the complexing agent, one or more of sodium tartrate and sodium citrate may be used; and as the reducing agent, one or more of hydrazine ($N_2H_2$), lithium aluminium hydride ($LiAlH_4$), sodium boron hydride ($NaBH_4$) and their derivatives may be used.

The particles thus obtained through the operation are magnetic particles having an axial ratio of 2 or more, of which the contour profile always has a curvature, and the particles are characterized in that the tip part thereof is rounded. The particles having the constitution are preferred because, when oriented in a magnetic field, the particles are hardly brought into contact or collide with each other, and therefore they may have a high level of orientation. The proportion of the particles having the external profile to all the particles is preferably at least 80%, more preferably at least 90%.

The magnetic particles thus produced according to the production method of the invention have, though they are fine particles, a high level orientation and have a low magnetic viscosity, and are therefore favorable as magnetic particles for high-density magnetic recording media.

BRIEF DESCRIPTION OF THE DRAWINGS

Fig. 1 shows TEM pictures of the metallic magnetic powder particles of Example and Comparative Example.
Fig. 2 shows exemplified graphs of TEM-EDS spectra (as divided by maximum Fe counts and normalized) in local analysis of the metallic magnetic powder particles of Example and Comparative Example.

PREFERRED EMBODIMENTS OF THE INVENTION

«Metallic Magnetic Powder»

The magnetic powder to which the present invention is directed is a metallic magnetic powder that comprises particles having a metallic magnetic phase composed mainly of "Fe" or "Fe and Co". Specifically, in the powder, the atomic ratio of "Fe" or "Fe and Co" to the magnetic elements (Fe, Co, Ni) constituting the metallic magnetic phase is 50% or more. In addition, the invention is directed to the powder having an oxide film, in which the elementary molar ratio of Co to Fe in all the powder particles including the oxide film and the metallic magnetic phase (hereinafter this is referred to as "Co/Fe atomic ratio") is from 0 to 50 at%. The Co/Fe atomic ratio is represented by "Co content (at%) / Fe content (at%) $\times$ 100". More preferably, the Co/Fe atomic ratio is from 5 to 45 at%, even more preferably from 10 to 40 at%. Within the range, the magnetic powder may have stable magnetic characteristics, and may have good weather resistance. As the oxide film, an iron oxide film is detected, but oxides of any other elements may coexist in the powder.
In the production process, "nonmagnetic ingredient" of rare earth elements (including Y), Al and Si is added as a sintering inhibitor; but the metallic magnetic powder of the invention is so planned that the nonmagnetic ingredient is dissolved out (in other words "eluted out") from it according to the method to be mentioned below, and therefore in the powder, the atomic ratio of (R + Al + Si)/(Fe + Co) is 20 at% or less. In this, as compared with hitherto-known particle-refined metallic magnetic powders, there is provided a powder having a large saturation magnetization relative to the particle volume. More preferably, the atomic ratio of (R + Al + Si)/(Fe + Co) is 15 at% or less, even more preferably 13 at% or less. Still more preferably, the ratio is 12 at% or less.
Of the elements constituting the powder particles except Fe, Co, Ni, rare earth elements (including Y), Al, Si and O, for example, various elements may mix in the powder, such as alkaline earth metal elements and the like added thereto as a sintering inhibitor, etc. The composition of the powder to which the invention is directed includes those that contain Fe, Co, Ni, rare earth elements (including Y), Al, Si and O with inevitable impurities as the balance.
Regarding the maximum count ratio as measured and computed with the energy dispersive X-ray fluorescence spectrometer attached to TEM (for example, TEM-EDS), the ratio of rare earth element/Fe and that of Al/Fe each are 0.5 or less, preferably 0.3 or less. A larger value than this means the existence of a large quantity of the nonmagnetic ingredient in the corresponding part of the particle, and is therefore unfavorable since the magnetic characteristic of the powder are diluted.
The metallic magnetic powder of the invention is characterized in that the abundance amount of the ingredients not contributing toward the magnetism except the metallic phase therein, especially that of Al and rare earth elements incorporated therein for preventing sintering is reduced. Concretely, this feature can be confirmed by local composition analysis of the grains (to be mentioned below). The most characteristic local composition parameter is the element detection intensity of the particle as analyzed with the energy dispersive X-ray fluorescence spectrometer attached to TEM, in which the electron beam is aimed at the position of 5 nm to be the distance in the long axis direction from the tip part in the log axis direction of the particle. A metallic magnetic powder that contains the particles of which the detection intensity satisfies the above-mentioned formula (2) in an abundance ratio of 70% or more, is an especially preferred embodiment to which the invention is directed.
Regarding the size of the powder particles, the invention is directed to those of which the mean long axis length is from 10 to 45 nm, preferably from 10 to 35 nm and the mean particle volume is 5000 nm$^3$ or less, preferably 4500 nm$^3$ or less. When larger than this, the particles could hardly satisfy the requirement of increasing the recording density of magnetic tapes.
Regarding the particle profile, the powder is preferably such that the particles of which the radius of curvature at the tip part in the long axis direction in the TEM (transmission electronic microscope) image of the particles is larger than 1/6 of the length of the short axis thereof at both tips thereof account for 90% or more of all the particles therein. The metallic magnetic powder of the type in which almost all particles have such a rounded tip profile is considered to be advantageous in attaining good orientation in a medium. The powder in which the abundance ratio of rounded particles is high includes one that contains the particles satisfying the above formula (1) in an abundance ratio of 50% or more.
Also preferably, the activation volume $V_{act}$, as computed through analysis of the powder for the magnetic characteristics thereof, is within a range of from $1 \times 10^{-18}$ to $3 \times 10^{-18}$ cm$^3$. Particles having a too large $V_{act}$ are unfavorable because, when they are used in producing recording media, the value of particle noise increases too much. On the other hand, particles of which $V_{act}$ is smaller than $1 \times 10^{-18}$ cm$^3$ are also unfavorable since they could hardly attain desired magnetic characteristics. More preferably, $V_{act}$ is from $1 \times 10^{-18}$ to $2.5 \times 10^{-18}$ cm$^3$, even more preferably from $1 \times 10^{-18}$ to $2 \times 10^{-18}$ cm$^3$.
Also preferably, the ratio of the physical volume of the particle, $V_{TEM}$, as computed from the long axis length and the short axis length of the oxide film-containing part of the particle of a columnar model (or an ellipsoidal model) on a TEM picture, to the activation volume $V_{act}$ is 1.2 or less. In this embodiment of the case, the abundance ratio of the ingredient not participating in the magnetism, such as rare earth element, Al and Si, is small, and therefore, the particle of the type is advantageous for enhancing the magnetic characteristics of the powder. Theoretically, the minimum ratio of the particle volume of a columnar model (or an ellipsoidal model) to $V_{act}$ is 1, but in this, since the former is $V_{TEM}$ that is measured through TEM, the ratio may be computationally lower than 1. The ratio nearer to 1 means that the physical volume of the particle is nearly equal to the activation volume that is responsible for the magnetization thereof, and the particles of the type are favorable since the ingredient therein not contributing to recording is extremely small. On the contrary, when the ratio is too large, the particles may undergo significant magnetic flocculation and may be therefore unsuitable to high-density magnetic recording.

«Production Method for Metallic Magnetic Powder»

Until the stage of from firing the starting material powder to which a sintering inhibitor has been added to reduction thereof, an ordinary production method for metallic magnetic powder may be employed. For example, iron oxyhydroxide containing Co and a sintering inhibitor is fired according to a known method at a temperature of from 250 to 700°C and is thereby converted into an iron oxide such as $\alpha$-$Fe_2O_3$ or the like. Afterwards, the iron oxide is heated and reduced in a vapor phase thereby giving a metallic magnetic powder composed mainly of $\alpha$-Fe. The metallic magnetic powder is referred to as "intermediate after reduction". For obtaining the metallic magnetic powder of the invention, the intermediate after reduction must be processed for dissolution (in other word, "elution") of the sintering inhibitor-derived nonmagnetic ingredient (dissolution treatment). After the dissolution treatment step, the intermediate is processed for treatment to form an oxide film (oxidation treatment) thereby giving the metallic magnetic powder of the invention.

[Dissolution Treatment Step]

The intermediate after reduction that is to be processed for dissolution treatment may be one having an oxide film formed on the surface thereof, but for enhancing the effect of dissolution of the sintering inhibitor-derived ingredient, preferably, a powder not processed for treatment to form an oxide film is prepared.

As the processing liquid, herein prepared is a solution of a compound (complexing agent) capable of forming a complex with at least one or more of the rare earth elements (including Y), Al and Si contained in the intermediate after reduction. The complexing agent is not specifically defined, for which chemicals generally used as a complexing agent in electroless plating are readily available, including, for example, tartrates, citrates, malates, lactates, etc. The concentration of the complexing agent may be from 0.01 to 10 mol/L or so. If desired, a substance having a pH buffering effect, for example, an ammonium salt may be added. The processing liquid may be prepared at a temperature near room temperature.

To the processing liquid, added is the intermediate after reduction. When the amount of the powder added is too large, then the reaction may be inhomogeneous. In general, the amount of from 1 to 100 g or so per liter of the processing solution, preferably from 5 to 50 g or so may give a favorable result. For securing the reaction uniformity in the liquid, stirring or forced dispersion (for example, ultrasonic dispersion or the like) is preferred.

After the powder has uniformly dispersed in the processing liquid, a reducing agent is added to the processing liquid. As the reducing agent, herein used is a substance well known as a strong reducing agent, such as hydrazine ($N_2H_2$), lithium aluminium hydride ($LiAlH_4$) or sodium boron hydride ($NaBH_4$). A reducing agent having weak reducing potency is unfavorable as causing dissolution of magnetic elements. A too high concentration of the reducing agent is unfavorable as lowering the effect of dissolution of nonmagnetic ingredient; but a too low concentration thereof is also unfavorable as causing easy dissolution of magnetic elements. The concentration of the reducing agent may be regulated generally within a range of from 0.01 to 10 mol/L, more preferably from 0.05 to 5 mol/L, even more preferably from 0.1 to 5 mol/L. After the reducing agent has been added, the liquid temperature is kept at 10 to 50°C, preferably at 15 to 40°C, and the system is processed for leaching operation for 10 to 300 min. With that, the nonmagnetic ingredient dissolves out in the processing liquid, and the amount ratio of the magnetic element in the magnetic powder particles is thereby relatively increased. Preferably, the reaction is attained in an inert gas atmosphere.

[Oxidation Treatment Step]

After the dissolution treatment step, the metallic magnetic powder is optionally processed for treatment of forming an oxide film on the surface layer of the particles therein. The method is not specifically defined, for which any hitherto known method is employable. Specifically, the oxidation treatment may be attained according to a wet method of putting an oxide into the liquid processed for the above dissolution treatment; or the powder separated/extracted from the dissolution-treated liquid may be processed for oxidation treatment according to a dry method. In a dry method, however, the powder may be often unstable and therefore must be carefully handled during treatment thereof.

[Re-reduction Treatment Step/Stabilization Treatment Step]

The metallic magnetic powder of the invention may be produced by processing the stabilized particles again for reduction treatment, and then further again processed for stabilization treatment of exposing the particles to an oxidizing atmosphere. These treatments are preferred as readily giving particles having rounded tip parts. The re-reduction step may be attained by heat-treating the particles in a reducing atmosphere such as hydrogen gas or the like. The heat treatment temperature is preferably 150°C or higher, but a too high temperature may cause intergranular sintering; and therefore, the temperature must be within a range of 350°C or lower, more preferably within a range of 300°C or lower. The stabilization treatment may be attained by heat-treating the particles in an oxidizing gas atmosphere. Also in this case, a too high temperature may readily cause sintering, and therefore, a temperature range of around from 150 to 350°C is preferred.

«Magnetic Recording Medium»

Thus obtained, the metallic magnetic powder of the invention may be used as a magnetic layer of a multilayer coating-type magnetic recording medium according to an ordinary method.
The multilayer coating-type magnetic recording medium comprises a nonmagnetic layer as the underlayer on a base film, and has a magnetic layer as the upper layer on that layer. The metallic magnetic powder of the invention may be incorporated in the coating composition to form the upper layer, magnetic layer.
The coating compositions for the upper layer and the underlayer may be prepared individually according to a method of blending the necessary materials in a predetermined ratio to give an intended formulation followed by kneading/dispersing them with a kneader and a sand grinder. For applying the coating compositions onto a base film, preferably employed is a so-called wet-on-wet system where the upper magnetic layer is formed as quickly as possible while the underlayer is still wet.
As the constitution of the multilayer coating-type magnetic recording medium includes, for example, the following may be exemplified.

[Base Film]

For example, there may be mentioned resin films of polyesters such as polyethylene terephthalate, polyethylene naphthalate, etc., polyolefins, cellulose triacetate, polycarbonate, polyamide, polyimide, polyamidimide, polysulfone · aramid, aromatic polyamide, etc.

[Coating Composition for Nonmagnetic Layer (underlayer)]

For example, there may be mentioned a nonmagnetic coating composition comprising 85 parts by mass of nonmagnetic powder ($\alpha$-iron oxide, by DOWA Electronics, having a mean long axis particle diameter of 80 nm), 20 parts by mass of carbon black, 3 part by mass of alumina, 15 parts by mass of vinyl chloride resin (Nippon Zeon's vinyl chloride binder, MR-110), 15 parts by mass of polyurethane resin (Toyobo's polyurethane resin, UR-8200), 190 parts by mass of methyl ethyl ketone, 80 parts by mass of cyclohexanone, and 110 parts by mass of toluene.

[Coating Composition for Magnetic Layer (upper layer)]

For example, there may be mentioned a magnetic coating composition comprising 100 parts by mass of the metallic magnetic powder of the invention, 5 parts by mass of carbon black, 3 parts by mass of alumina, 15 parts by mass of vinyl chloride resin (Nippon Zeon's MR-110), 15 parts by mass of polyurethane resin (above-mentioned UR-8200), 1 part by mass of stearic acid, 1 part by mass of acetylacetone, 190 parts by mass of methyl ethyl ketone, 80 parts by mass of cyclohexanone, and 110 parts by mass of toluene.

EXAMPLES

«Example 1»

3000 mL of pure water was put into a 5000-mL beaker, and while this was kept at 40°C with a temperature-regulating machine, 500 mL of a solution prepared by mixing 0.03 mol/L cobalt sulfate (special grade chemical) solution and 0.15 mol/L ferrous sulfate (special grade chemical) solution in a blend ratio of 1/4 was added thereto. Afterwards, granular sodium carbonate was directly added thereto in an amount to be 3 equivalents as carbonic acid relative to Fe + Co, and while the liquid temperature was so controlled as not to be over a range of 40 $\pm$ 5°C, a suspension composed mainly of iron carbonate was prepared. This was ripened for 1 hour and 30 minutes, and then air was added thereto at 50 mL/min in an amount so controlled that the oxidation ratio of Fe ion could be 20% to thereby form nucleic crystals. This was heated up to 65°C, and pure oxygen was further introduced thereinto at 50 mL/min to continue the oxidation for 1 hour. Afterwards, pure oxygen was changed to nitrogen, and the system was ripened for about 30 minutes.

Next, the liquid temperature was cooled to 40°C, and after the temperature became stable, aqueous aluminium sulfate solution (1.0 % by mass as Al) was kept added thereto at an addition rate of 5.0 g/min continuously for 20 minutes to thereby grow iron oxyhydroxide. Further, pure oxygen was kept introduced thereinto at 50 mL/min, and the oxidation was completed. A small amount of the supernatant was sampled, and using a solution of potassium iron hexacyanate, no color change of the liquid was confirmed for the endpoint of oxidation.

After the oxidation, 300 g of aqueous sulfate solution of yttrium oxide (containing 2.0% by mass as Y) was added. With that, a powder of iron oxyhydroxide having solid solution of Al therein and coated with Y on the surface thereof was obtained.

According to an ordinary method, the cake of iron oxyhydroxide was taken out through filtration, washed with water, and dried at 130°C thereby giving a dry solid of iron oxyhydroxide. 10 g of the solid was put into a bucket, and fired in air at 400°C while water vapor was introduced thereinto at 1.0 g/min as water, thereby giving an iron-based oxide composed mainly of $\alpha$-iron oxide (hematite).

The $\alpha$-iron oxide was put into an aeratable bucket, the bucket was set in a pass-through reduction furnace, and while hydrogen gas (flow rate: 40 L/min) was aerated therethrough, water vapor was introduced into it at a rate of 1.0 g/min as water, and the oxide was thus reduced by heating at 400°C for 30 minutes. After the reduction, supply of water vapor was stopped, and this was heated up to 600°C in a hydrogen atmosphere at a heating rate of 10°C/min. Afterwards, while water vapor was introduced into it at a rate of 1.0 g/min as water, this was processed for high-temperature reduction treatment for 60 minutes, thereby giving a metallic magnetic powder (iron-based alloy powder). In this stage, the metallic magnetic powder is not as yet processed for treatment to form an oxide film thereon (oxidation treatment), and the metallic magnetic powder corresponds to the above-mentioned "intermediate after reduction".

[Dissolution Treatment]

The metallic magnetic powder corresponding to "intermediate after reduction" was processed for dissolution treatment as follows:

Sodium tartrate as a complexing agent to be in an amount of 0.05 mol/L and ammonium sulfate as a buffer to be in an amount of 0.1 mol/L were mixed in 900 mL of pure water, and then controlled to have a pH of 9 with $NH_3$, thereby preparing a processing liquid. The processing liquid was added to 10 g of the metallic magnetic powder corresponding to "intermediate after reduction", the temperature was kept at 30°C, and sodium boron hydride as a reducing agent was added thereto to be in an amount of 0.3 mol/L. This was ripened at 30°C with stirring for 30 minutes to give a slurry. The slurry was processed for solid-liquid separation, and the solid content and the filtrate were collected. The solid content was taken out through filtration, washed with water and dried to be a dry matter.

[Oxidation Treatment]

The dry matter was processed for oxidation treatment for forming an oxide film thereon as follows:

The dry matter was put into an aeratable bucket, the bucket was set in a pass-through reduction furnace, and while nitrogen (flow rate: 50 L/min) was introduced thereinto, the furnace temperature was lowered to 90°C at a cooling rate of 20°C/min. In the initial stage of oxide film formation, a mixed gas of nitrogen (50 L/min) and pure oxygen (400 mL/min) was introduced into the furnace, and while water vapor was introduced thereinto at a rate of 1.0 g/min as water, an oxide film was formed in the mixed atmosphere of water vapor/oxygen/nitrogen; and in the stage where heat generation by the surface oxidation was retarded, the supply rate of air was gradually increased and the oxygen concentration in the atmosphere was thereby elevated. The final pure oxygen flow rate was 2.0 L/min. In this stage, the total amount of the gas introduced into the furnace was controlled to be almost constant by regulating the flow rate of nitrogen thereinto. The oxidation treatment was attained in an atmosphere kept nearly at 90°C for 1 hour.

[Re-reduction Treatment/Stabilization Treatment]

The powder on which the oxide film had been formed through the above-mentioned oxidation treatment was exposed to a hydrogen atmosphere at 250°C for 30 minutes for re-reduction treatment thereof. Afterwards, the powder was processed for stabilization treatment according to the same oxidation treatment as above.

Thus obtained, the metallic magnetic powder was analyzed for the powdery characteristics and the composition thereof, as follows:

[Measurement of long axis length/short axis length]

The powder to be analyzed was observed with TEM (JEOL's JEM-100CX Mark-II Model) at an acceleration voltage of 100 kV in a bright field. The observed image was taken as a photographic picture, for example, at a 58000-power magnification, and the image was enlarged, for example, by 9 times in horizontal and vertical directions. For every sample, 300 mono-dispersed particles were randomly selected from plural photographic pictures, and every particle was analyzed to measure the long axis length and the short axis length thereof appearing on the photographic picture. The found data were averaged to give the long axis length and the short axis length of the sample.

[Volume of Particle]

The particle was approximated to a column, and using the mean values of the long axis length and the short axis length thereof measured with TEM according to the above-mentioned method, the volume of the particle as $V_{TEM}$ was computed according to the following formula (4):

$$V_{TEM} = \pi \times [\text{long axis length}] \times ([\text{short axis length}]/2)^2 \ ... \ (4)$$

The activation volume, $V_{act}$ of the particle was determined according to a known method through magnetism measurement.

[Specific Surface Area]

Measured according to BET method, using Yuasa Ionics' 4-Sorb US.

[Crystallite size Dx]

Determined according to the following formula (5), using an X-ray diffractiometer (Rigaku Electric's RAD-2C).

$$Dx = K\lambda/\beta\cos\theta \ ... \ (5)$$

wherein K is the Scherrer constant 0.9; $\lambda$, is the Co-K$\alpha$ ray wavelength; $\beta$ is the half-value width of the diffraction peak of Fe(110) plane (radian); and $\theta$ is the diffraction angle (radian).

Regarding the test range, the sample was scanned within a range of $2\theta$ of from 45 to 60°, and the found data were computed. The scanning speed was 5°/min, and the cumulated number was 5 times.

[Magnetic characteristics]

The magnetic characteristics were determined, using Toei Kogyo's VSM apparatus (VSM-7P) in an external magnetic field of 10 kOe (795.8 kA/m). The magnetic viscosity is a viscosity to be derived from the attenuation rate of magnetization relative to the magnetic field application time, and the magnetic viscosity coefficient was determined according to a known method in an external magnetic field of -1 kOe.

[Compositional analysis of powder]

The composition of the powder was determined through mass spectrometry of the entire particle including the metallic magnetic phase and the oxide film. Co, Al and rare earth elements (including Y) were quantified using Jarrel-Ash Japan's high-frequency induction plasma emission spectrometer ICP (IRIS/AP); Fe was quantified using Hiranuma Sangyo's Hiranuma automatic titrator (COMTIME-980 Model). The data were given in terms of % by mass, and were therefore suitably converted into those in terms of atomic % (at%). The atomic ratio of Co/Fe, the atomic ratio of Al/(Fe + Co), the atomic ratio of Y/(Fe + Co), and the atomic ratio of (R + Al + Si)/(Fe + Co) were thus computed. In Comparative Examples and Examples, the ratio of Si/(Fe + Co) was lower than the detection limit; and in these Examples, therefore, the atomic ratio of (R + Al + Si)/(Fe + Co) is equal to the atomic ratio of (R + Al)/(Fe + Co).

[Local compositional analysis of particle]

The powder particles were observed with TEM, and using the energy dispersive X-ray fluorescence spectrometer attached to TEM (EDS), the particle was analyzed for the composition at the following three sites thereof.

(A) Around the tip part in the long axis direction of the particle - concretely, the electron beam is aimed at the position of 5 nm to be the distance in the long axis direction from the tip part of the particle. This site corresponds to the part departing from the part seen to have a relatively dark brightness and considered to be the metal core in the TEM image of the particle, and is considered to be the part composed mainly of the oxide film or the nonmagnetic ingredient.
(B) Around the edge of the short axis of the particle.
(C) Around the center part of the particle.

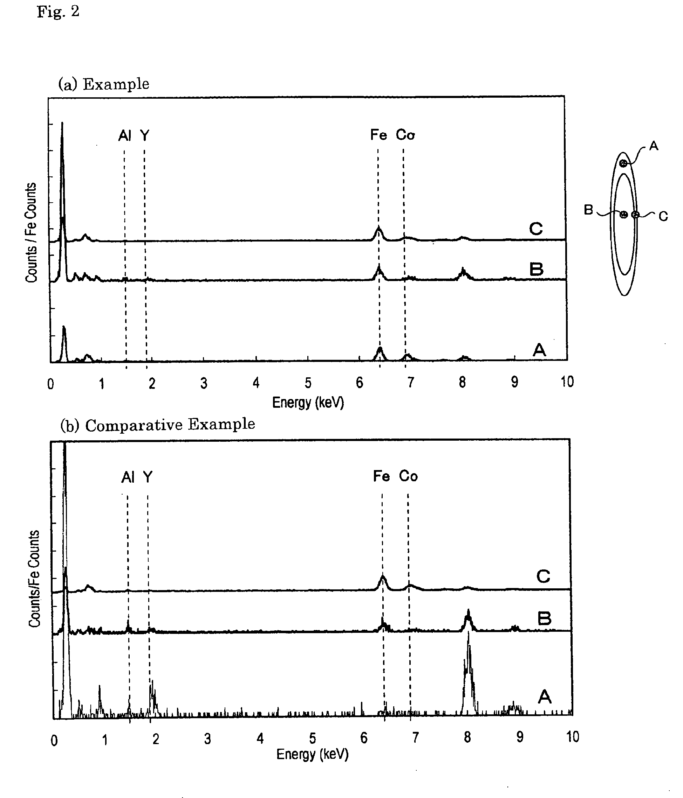

These corresponds to the measurement sites A, B and C graphically shown in Fig. 2.
Each element was computed, based on the peak appearing at the following site.

Al:     1.5 keV,
Y:      1.9 keV,
Fe:     6.4 keV,
Co:     6.9 keV.

Next, using the metallic magnetic powder processed for re-reduction treatment/stabilization treatment as above, a magnetic tape was produced as follows, and analyzed for its magnetic characteristics as a medium. In this, for more clearly confirming the effect of the metallic magnetic powder, the tape produced herein was a single layer tape of a magnetic tape alone, not having a nonmagnetic layer.

[1] Preparation of magnetic coating composition:

0.35 g of the magnetic powder was weighed and put into a pot (inner diameter 45 mm, depth 13 mm). This was kept open for 10 minutes. Next, 0.700 mL of a vehicle [manufactured by Toyobo - mixture solution of vinyl chloride resin MR-110 (22% by mass), cyclohexanone (38.7% by mass), acetylacetone (0.3% by mass), n-butyl stearate (0.3% by mass), methyl ethyl ketone (38.7% by mass)] was collected with a micropipette, and added to the pot. Immediately, 30 g of steel balls (2 $\phi$) and 10 nylon balls (8 $\phi$) were added to the pot, the pot was closed and left for 10 minutes. Afterwards, the pot was set in a centrifugal ball mill (FRITSH P-6), and its rotation speed was gradually increased and set at 600 rpm, at which the contents were dispersed for 60 minutes. After the centrifugal ball mill was stopped, the pot was taken out, and using a micropipette, 1.800 mL of a regulation liquid that had been previously prepared by mixing methyl ethyl ketone and toluene in a ratio of 1/1 was added thereto. Again the pot was set in the centrifugal ball mill, and the contents were dispersed at 600 rpm for 5 minutes, and the dispersion was thus finished.

[2] Production of magnetic tape:

After the dispersion, the pot was opened, the nylon balls were removed, and the coating composition was put into an applicator (55 $\mu$m) along with the steel balls therein, and applied onto a base film (Toray's polyethylene film, trade name 15C-B500 having a thickness of 15 $\mu$m). After thus coated, the film was immediately put at the coil center of a 5.5-kG orientation machine, then processed for magnetic field orientation, and thereafter dried.

[Evaluation of tape characteristics]

Thus produced, the tape was magnetically analyzed with the above-mentioned VSM, and its coercive force Hcx, squareness ratio SQ, and orientation ratio OR were thus determined. According to the same method as above, the activation volume $V_{act}$ and the magnetic viscosity were determined.
Of the test results, the powder characteristics are shown in Table 1, and the tape characteristics are in Table 2 (the same shall apply to the following Examples).

«Example 2»

A metallic magnetic powder was produced in the same manner as in Example 1, for which, however, the particle diameter of the starting material particles in the production process for iron oxyhydroxide in Example 1 was varied. This was analyzed and tested in the same manner as in Example 1 (the same shall apply to the following Examples).

«Comparative Example 1»

A metallic magnetic powder was produced in the same manner as in Example 1, for which, however, the particle diameter of the starting material particles in the production process for iron oxyhydroxide in Example 1 was varied, and the dissolution step was omitted. In this case, the "intermediate after reduction" was, not taken out of the bucket, directly processed in the oxidation treatment step by changing the furnace atmosphere from hydrogen to nitrogen.
In analysis of the particles with TEM-EDS, the detection intensity ratio of Al/Fe was 1.333 and the detection intensity ratio of Y/Fe was 2.67, at the site of (A).

«Comparative Example 2»

A metallic magnetic powder was produced in the same manner as in Comparative Example 1, for which, however, the particle diameter of the starting material particles in the production process for iron oxyhydroxide in Comparative Example 1 was varied.
In analysis of the particles with TEM-EDS, the detection intensity ratio of Al/Fe was 0.765 and the detection intensity ratio of Y/Fe was 0.706, at the site of (A).

## Table 1

| Grouping | Powder Characteristics | | | | | |
|---|---|---|---|---|---|---|
| | Long axis length nm | $V_{TEM}$ $\times 10^{-18}$ cm$^3$ | $V_{act}$ $\times 10^{-18}$ cm$^3$ | $V_{TEM}/V_{act}$ | BET m$^2$/g | Dx nm |
| Example 1 | 35.4 | 1.64 | 1.76 | 0.93 | 94.0 | 9.5 |
| Example 2 | 29.3 | 1.72 | 1.78 | 0.97 | 76.0 | 9.5 |
| Comparative Example 1 | 46.7 | 3.83 | 2.41 | 1.59 | 66.8 | 11.7 |
| Comparative Example 2 | 37.0 | 2.64 | 1.71 | 1.54 | 82.3 | 9.0 |

| Grouping | Powder Characteristics | | | |
|---|---|---|---|---|
| | Hc | | $\sigma s$ Am$^2$/kg | Magnetic viscosity coefficient $\times 10^{-3}$ |
| | Oe | kA/m | | |
| Example 1 | 2240 | 178.3 | 105.0 | 1.42 |
| Example 2 | 1980 | 157.6 | 121.0 | 5.42 |
| Comparative Example 1 | 2460 | 195.8 | 120.8 | 0.71 |
| Comparative Example 2 | 2250 | 179.0 | 99.2 | 2.86 |

Table 2

| Grouping | Tape Characteristics | | | | | | | |
|---|---|---|---|---|---|---|---|---|
| | L. axis length nm | $V_{TEM} \times 10^{-18}$ cm$^3$ | $V_{act} \times 10^{-18}$ cm$^3$ | $V_{TEM}/V_{act}$ | Hc | | SQx | OR |
| | | | | | Oe | kA/m | | |
| Example 1 | 35.4 | 1.64 | 1.34 | 1.22 | 2810 | 223.6 | 0.840 | 2.50 |

(continued)

| Grouping | Tape Characteristics | | | | | | | |
|---|---|---|---|---|---|---|---|---|
| | L. axis length nm | $V_{TEM} \times 10^{-18}$ cm$^3$ | $V_{act} \times 10^{-18}$ cm$^3$ | $V_{TEM}/V_{act}$ | Hc | | SQx | OR |
| | | | | | Oe | kA/m | | |
| Example 2 | 29.3 | 1.72 | 1.49 | 1.15 | 2615 | 208.1 | 0.820 | 2.50 |
| Comparative Example 1 | 46.7 | 3.83 | 1.65 | 2.32 | 2845 | 226.4 | 0.860 | 2.40 |
| Comparative Example 2 | 37.0 | 2.64 | 1.27 | 2.08 | 2580 | 205.3 | 0.800 | 2.10 |

As compared with those of Comparative Examples not processed for dissolution treatment, the metallic magnetic powders processed for dissolution treatment in Examples had a smaller $V_{TEM}/V_{act}$ (Table 1), from which it is considered that the amount of the ingredients adhering to the particles but not contributing toward magnetism except the metallic phase therein would be reduced in the powder particles. The same applied to the tape (Table 2). In general, the magnetic viscosity increases with the reduction in the particle size. As known from comparison between Example 1 and Comparative Example 2 in Table 1, the particles of the invention in which the amount of the ingredient except the metallic phase had been reduced exhibited a significantly reduced magnetic viscosity among those of which the particle size was on the same level. Fig. 3 in Non-Patent Reference 1 shows test data of magnetic viscosity, in which the magnetic viscosity coefficient under the same condition as in the above (-1 kOe) of Samples 1 to 4 was $1 \times 19^{-3}$ (= $0.1 \times 10^{-4}$), or that is, these samples had a relatively low magnetic viscosity. However, as shown in Table 1 in the Non- Patent Reference, the long axis length (1) of the particles is 50 nm or more and is large. Sample 5 in Fig. 3 in the Reference has a long axis length of 40 nm, or that is, its particle size is relatively near to that of the powder, 35 nm, in Example 1 of the present application. However, its magnetic viscosity coefficient was $11.3 \times 10^{-3}$ (= $1.13 \times 10^{-4}$) or so at -1 kOe, and is extremely high as compared with $1.42 \times 10^{-3}$ in Example 1. In other words, it is apparent that the metallic magnetic powder processed for dissolution treatment of the present invention has a significantly reduced magnetic viscosity, as compared with the known metallic magnetic powder of which the particle size is on the same level. It is considered that the value of $V_{TEM}/V_{act}$ and the magnetic viscosity would have some influence on the magnetic characteristics of media, and in fact, the metallic magnetic powders of Examples of the invention exhibited increased orientation ratio OR (Table 2).

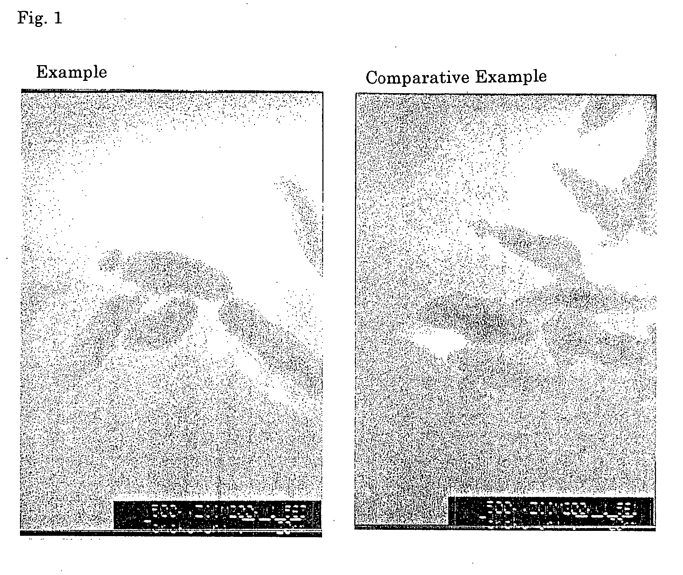

Fig. 1 shows TEM pictures of the metallic magnetic powder particles obtained in Example 1 and Comparative Example 2. The measurement magnification was 500000 times. On both photographic pictures, the distance between both the left and right sides corresponds to about 105 nm. The particles of Comparative Example not processed for dissolution treatment had a relatively sharp profile at the tip parts in the long axis direction thereof. As opposed to these, the particles of Example that had been processed for dissolution treatment and had finally processed for re-reduction treatment and stabilization treatment had little tendency toward "tapering at the tip part" but had a rounded profile at the tip parts in the long axis direction thereof. On the TEM image, the proportion of the particles of which the radius of curvature at the tip part in the long axis direction on the TEM image of the particles is larger than 1/6 of the short axis length thereof was computed; and in the powders obtained in Comparative Examples 1 and 2, the proportion was less than 50%, but in the powders obtained in Examples 1 and 2, Oe proportion was 90% or more. In addition, the abundance ratio of the particles satisfying the above formula (1) was computed; and in the powders obtained in Comparative Examples 1 and 2, the abundance ratio was less than 50%, but in the powders obtained in Examples 1 and 2, the ratio was 50% or more. It is considered that the tip-rounded particle profile would be advantageous in enhancing the orientation of the particles.

Fig. 2 shows graphs of TEM-EDS spectra (as divided by maximum Fe counts and normalized) in local compositional analysis of the metallic magnetic powder particles obtained in Example 1 and Comparative Example 2. The codes A to C correspond to the above-mentioned measurement sites A to C, respectively. At around the tip part in the long axis direction (the position A), the sample of Comparative Example had a high detection intensity of Al and Y and did not satisfy the above-mentioned formula (2). As opposed to this, the sample of Example that had been processed for dissolution treatment satisfied the formula (2). Of the powders of Examples and Comparative Examples, 20 particles were selected at random and analyzed in the manner as above, and, as a result, the abundance ratio of the particles satisfying the formula (2) was less than 5% both in Comparative Examples 1 and 2 (that is, the particles satisfying the formula (2) were not detected). As opposed to these, both in Examples 1 and 2 the abundance ratio was 70% or more.

**Claims**

1. A metallic magnetic powder for magnetic recording, which comprises particles having a particle length of from 10 nm to 45 nm and an axial ratio of 2 or more and in which the tip part of the particles is rounded.

2. A metallic magnetic powder for magnetic recording, which comprises particles having a metallic magnetic phase composed mainly of Fe or Fe and Co, and having an oxide film, and wherein the mean long axis length of the powder particles is from 10 to 45 nm, the axial ratio of the particles is 2 or more, the atomic ratio of (R + Al + Si)/(Fe + Co), in which R represents a rare earth element (including Y) and which is computed from the data of the content (atomic %) of each element contained in the metallic magnetic powder particles, is 20% or less, and particles of which the radius of curvature at the tip part in the long axis direction in the TEM image of the particles is larger than 1/6 of the length of the short axis thereof account for 90% or more of all the particles therein.

3. A metallic magnetic powder for magnetic recording, which comprises particles having a metallic magnetic phase composed mainly of Fe or Fe and Co, and having an oxide film, and wherein the mean long axis length of the powder particles is from 10 to 45 nm, the axial ratio of the particles is 2 or more, the atomic ratio of (R + Al + Si)/(Fe + Co), in which R represents a rare earth element (including Y) and which is computed from the data of the content (atomic %) of each element contained in the metallic magnetic powder particles, is 20% or less, and the particles are so defined that those of which the profile around both tip parts in the long axis direction in the TEM image thereof satisfies the following formula (1) are contained in an abundance ratio of 50% or more:

$$D_l/D_w \geq 0.7 \ldots (1)$$

wherein the direction perpendicular to the long axis in the TEM image of the particles is called the short axis direction, $D_w$ indicates the diameter of the longest part in the short axis direction of the particle (that is, the short axis length), and $D_l$ means the diameter in the short axis direction at the position where the long axis direction distance from the tip part in the long axis direction of the particle is $D_w/2$.

4. A metallic magnetic powder for magnetic recording, which comprises particles having a metallic magnetic phase composed mainly of Fe or Fe and Co, and having an oxide film, and wherein the mean long axis length of the powder particles is from 10 to 45 nm, the axial ratio of the particles is 2 or more, the atomic ratio of (R + Al + Si)/(Fe + Co), in which R represents a rare earth element (including Y) and which is computed from the data of the content (atomic %) of each element contained in the metallic magnetic powder particles, is 20% or less, and the particles of such that, when, using the energy dispersive X-ray fluorescence spectrometer attached to TEM, the electron beam is aimed at the position of 5 nm to be the distance in the long axis direction from the tip part in the log axis direction of the particle, the element detection intensity satisfies the following formula (2) are contained in an abundance ratio of 70% or more:

$$I_{Al} + I_R < I_{Fe} + I_{Co} \ldots (2)$$

wherein $I_{Al}$, $I_R$, $I_{Fe}$ and $I_{Co}$ each are the detection intensity (counts) of Al, rare earth element (including Y), Fe and Co, respectively; and $I_R$ of two or more rare earth elements, if any, is the total of the detection intensity of the individual rare earth elements.

5. The metallic magnetic powder for magnetic recording as claimed in claim 4, wherein the particles are so defined that those of which the profile around both tip parts in the long axis direction in the TEM image thereof satisfies the following formula (2) are contained in an abundance ratio of 50% or more:

$$D_l/D_w \geq 0.7 \ldots (2)$$

wherein the direction perpendicular to the long axis in the TEM image of the particles is called the short axis direction, $D_w$ indicates the diameter of the longest part in the short axis direction of the particle (that is, the short axis length),

and $D_l$ means the diameter in the short axis direction at the position where the long axis direction distance from the tip part in the long axis direction of the particle is $D_w/2$.

6. The metallic magnetic powder as claimed in any of claims 1 to 5, wherein the mean particle volume $V_{TEM}$ including the oxide film is 5000 nm$^3$ or less.

7. The metallic magnetic powder for magnetic recording as claimed in any of claims 1 to 6, which, when observed on the transmission electronic microscope picture thereof, and when the coating thickness of the oxide film in the tip part in the long axis direction of the particle is represented by x nm and the coating thickness of the oxide film at the tip part in the short axis direction is by y nm, satisfies $x/y \leq 5$.

8. The metallic magnetic powder for magnetic recording as claimed in any of claims 1 to 7, which has a magnetic viscosity coefficient in an applied magnetic field of -1 kOe of from $1 \times 10^{-3}$ to $10 \times 10^{-3}$.

9. The magnetic powder for magnetic recording as claimed in any of claims 1 to 8, which has a particle volume $V_{TEM}$ of 5000 nm$^3$ ($5 \times 10^{-18}$ cm$^3$) or less including the oxide film and approximated to a column, and has an activation volume $V_{act}$, as measured for the powder, of from $1 \times 10^{-18}$ to $2 \times 10^{-18}$ cm$^3$.

10. The metallic magnetic powder for magnetic recording as claimed in claim 9, wherein $V_{TEM}$ and $V_{act}$ satisfy the following formula (3):

$$V_{TEM}/V_{act} \leq 1.2 \ ... \ (3).$$

11. A multilayer coating-type magnetic recording medium that uses the magnetic powder of any of claims 1 to 10.

12. A method for producing a metallic magnetic powder for magnetic recording, which comprises treatment including, in sequence, a step of allowing a reducing agent to act on a metallic magnetic powder comprising particles having a metallic magnetic phase composed mainly of Fe or Fe and Co and containing one or more of rare earth elements (including Y), Al and Si (these are referred to as "nonmagnetic ingredient"), in a liquid containing a complexing agent capable of forming a complex with at least one or more of the nonmagnetic ingredients, to thereby make the nonmagnetic ingredient in the powder particles dissolve out into the liquid (dissolution treatment step), a step of heat treatment in a reducing gas atmosphere (re-reduction treatment step), and a step of heat treatment in an oxidizing gas atmosphere (stabilization treatment step).

13. The method for producing a metallic magnetic powder for magnetic recording as claimed in claim 12, which includes a step of forming an oxide film on the surface of the powder particles (oxidation treatment step) after the dissolution treatment step and before the re-reduction step.

14. The method for producing a metallic magnetic powder for magnetic recording as claimed in claim 12 or 13, wherein at least one or more of sodium tartrate and sodium citrate are used as the complexing agent.

15. The method for producing a metallic magnetic powder for magnetic recording as claimed in any of claims 12 to 14, wherein one or more of hydrazine ($N_2H_2$), lithium aluminium hydride ($LiAlH_4$), sodium boron hydride ($NaBH_4$) and their derivatives are used as the reducing agent.

Fig. 1

Example                                    Comparative Example

Fig. 2

(a) Example

(b) Comparative Example

### INTERNATIONAL SEARCH REPORT

| | International application No. |
|---|---|
| | PCT/JP2008/064390 |

A. CLASSIFICATION OF SUBJECT MATTER
*H01F1/06*(2006.01)i, *G11B5/706*(2006.01)i

According to International Patent Classification (IPC) or to both national classification and IPC

B. FIELDS SEARCHED

Minimum documentation searched (classification system followed by classification symbols)
H01F1/06, G11B5/706

Documentation searched other than minimum documentation to the extent that such documents are included in the fields searched
Jitsuyo Shinan Koho          1922-1996     Jitsuyo Shinan Toroku Koho    1996-2008
Kokai Jitsuyo Shinan Koho    1971-2008     Toroku Jitsuyo Shinan Koho    1994-2008

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y<br>A | JP 2007-294841 A  (DOWA Electronics Materials Co., Ltd.),<br>06 November, 2007 (06.11.07),<br>Full text; all drawings<br>& US 2007/0227302 A1    & EP 1840905 A1 | 1,4,6,11-15<br>2-3,5,7-10 |
| Y<br>A | JP 2004-035939 A  (Toda Kogyo Corp.),<br>05 February, 2004 (05.02.04),<br>Claim 6; Par. Nos. [0102] to [0116]<br>(Family: none) | 1,4,6,11-15<br>2-3,5,7-10 |
| Y<br>A | JP 2002-289145 A  (Toda Kogyo Corp.),<br>04 October, 2002 (04.10.02),<br>Par. Nos. [0084] to [0102]<br>(Family: none) | 1,4,6,11-15<br>2-3,5,7-10 |

| ☒ | Further documents are listed in the continuation of Box C. | ☐ | See patent family annex. |
|---|---|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered   to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search<br>    06 November, 2008 (06.11.08) | Date of mailing of the international search report<br>    18 November, 2008 (18.11.08) |
|---|---|
| Name and mailing address of the ISA/<br>    Japanese Patent Office | Authorized officer |
| Facsimile No. | Telephone No. |

Form PCT/ISA/210 (second sheet) (April 2007)

| INTERNATIONAL SEARCH REPORT | International application No. |
|---|---|
| | PCT/JP2008/064390 |

C (Continuation).    DOCUMENTS CONSIDERED TO BE RELEVANT

| Category* | Citation of document, with indication, where appropriate, of the relevant passages | Relevant to claim No. |
|---|---|---|
| A | JP 2007-257713 A  (Fujifilm Corp.),<br>04 October, 2007 (04.10.07),<br>Par. No. [0021]<br>(Family: none) | 1-15 |
| A | JP 2005-276361 A  (Fuji Photo Film Co., Ltd.),<br>06 October, 2005 (06.10.05),<br>Full text; all drawings<br>& US 2005/0214593 A1 | 1-15 |
| E,X | JP 2008-270300 A  (DOWA Electronics Materials<br>Co., Ltd.),<br>06 November, 2008 (06.11.08),<br>Full text; all drawings<br>(Family: none) | 1-15 |

Form PCT/ISA/210 (continuation of second sheet) (April 2007)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2003296915 A
- JP 2006128535 A

- JP 2005276361 A

**Non-patent literature cited in the description**

- **S. J. F. Chadwick et al.** *Journal of Magnetism and Magnetic Materials,* 2005, 134-137